# DEMANDE DE BREVET EUROPEEN

(11) **EP 1 221 730 A1**
(43) Date de publication de la demande: **10.07.2002**
(21) Numéro de dépôt: 01403356.7
(22) Date de dépôt: 24.12.2001
(51) Int. Cl.: H01M 4/62, H01M 4/48

(54) **Générateur électrochimique rechargeable au lithium**

(30) Priorité: 04.01.2001 FR 0100075
(71) Demandeur: ALCATEL, 75008 Paris (FR)
(72) Inventeur: Siret, Clémence, 33520 Bruges (FR); Castaing, Frédéric, 33170 Gradignan (FR); Biensan, Philippe, 33360 Cardignan de Bordeaux (FR)
(74) Mandataire: Fournier, Michel

(57) **Abrégé**

La présente invention a pour objet un générateur rechargeable au lithium comprenant une électrode positive dont la matière électrochimiquement active comprend au moins un oxyde d'un métal de transition, et une électrode négative comprenant un support conducteur et une couche active contenant une matière électrochimiquement active qui est un oxyde mixte de lithium et de titane de formule générale LixTiyO4 dans laquelle 0,8 ≤ x ≤ 1,4 et 1,6 ≤ y ≤ 2,2, et un liant qui est un polymère ne contenant pas de fluor. Le polymère non-fluoré est de préférence soluble dans l'eau ou capable de former une émulsion stable lorsqu'il est mis en suspension dans l'eau. Le liant contient de préférence un élastomère, notamment un copolymère d'acrylonitrile et de butadiène ou un copolymère de styrène et de butadiène, et/ou un composé cellulosique comme la carboxyméthylcellulose.

## Description

La présente invention se rapporte à un générateur électrochimique rechargeable au lithium comportant une électrode négative dont la matière électrochimiquement active est un oxyde mixte de lithium et de titane.

Les électrodes des accumulateurs à électrolyte organique classiques contiennent une matière électrochimiquement active qui constitue une structure d'accueil dans laquelle les cations, par exemple les cations lithium, s'insèrent et se désinsèrent au cours du cyclage. Chaque électrode est constituée d'un support conducteur servant de collecteur de courant et d'au moins une couche active. Elle est réalisée par dépôt sur le support d'une pâte contenant la matière électrochimiquement active, éventuellement des additifs conducteurs, un liant polymère et un diluant.
Le liant polymère de l'électrode doit en premier lieu assurer la cohésion de la matière active qui est sous forme pulvérulente, sans masquer une part importante de la surface électrochimiquement active; cet effet dépend des propriétés de mouillage du liant. Un compromis doit être trouvé car une interaction trop forte du liant avec la matière active conduit à un recouvrement trop important qui entraîne une baisse de la surface active et, par voie de conséquence, de la capacité à régime élevé. Les réducteurs / oxydants utilisés comme matière active sont très puissants ; le liant doit posséder une réactivité la plus faible possible pour être capable de supporter sans dégradation des conditions extrêmes de fonctionnement. En outre le liant polymère doit aussi permettre l'adhésion de la pâte sur le collecteur de courant et accompagner les variations dimensionnelles de la matière active lors des cycles de charge et de décharge. Il doit bien entendu être compatible avec les électrolytes utilisés.
Ces objectifs doivent être remplis non seulement à l'assemblage de l'accumulateur, mais encore tout au long de son fonctionnement. A chaque matière active correspond donc un ou plusieurs liants qui lui permettent de fonctionner dans les meilleures conditions.

Le document EP-0 845 825 décrit un générateur électrochimique rechargeable au lithium comportant une électrode négative dont la matière électrochimiquement active est un matériau carboné, et une électrode positive dont la matière électrochimiquement active est un titanate de lithium représenté par la formule LiₓTi_{y}O₄ dans laquelle 0,8 ≤ x ≤ 1,4 et 1,6 ≤ y ≤ 2,2, notamment le titanate de lithium dans lequel x = 1,33 et y = 1,67. L'électrode positive est préparée en mélangeant 70% à 90% en poids de titanate de lithium, 5% à 20% en poids d'un agent conducteur et 1% à 10% en poids d'un liant, puis en comprimant le mélange obtenu. Le liant est de préférence une résine fluorée comme le polytétrafluoroéthylène (PTFE), le polyfluorure de vinylidène (PVDF), etc....
Le document JP-2000 106 217 concerne un générateur électrochimique secondaire à électrolyte non-aqueux comprenant une électrode positive contenant Li_{4/3}Ti_{5/3}O₄ comme matière active et une électrode négative contenant un matériau carboné dopé au lithium.

Le document EP-0 617 474 décrit un générateur électrochimique rechargeable au lithium comprenant une électrode positive dont la matière électrochimiquement active a un potentiel de décharge d'au moins 2V par rapport à Li/Li⁺, comme V₂O₅, LiMn₂O₄, LiCoO₂, ou LiNiO₂, et une électrode négative dont la matière électrochimiquement active est un oxyde de lithium et de titane de structure spinelle représenté par la formule LiₓTi_{y}O₄ dans laquelle 0,8 ≤ x ≤ 1,4 et 1,6 ≤ y ≤ 2,2. La matière active négative répond de préférence à la formule Li_{4/3}Ti_{5/3}O₄. L'électrode négative contient en outre jusqu'à 5% en poids d'un liant contenant du fluor comme le polytétrafluoroéthylène (PTFE).
L'utilisation du PTFE et du PVDF comme liant d'électrode négative donne lieu à des baisses importantes de capacité au cours du cyclage. En outre les propriétés anti-adhérentes du PTFE interdisent l'utilisation d'un support conducteur mince tel qu'un feuillard, indispensable à l'obtention de fortes énergies volumiques.

La présente invention a pour but de proposer un générateur électrochimique rechargeable au lithium comprenant une électrode négative dont la matière électrochimiquement active est un oxyde mixte de titane et de lithium, la capacité de cette électrode négative restant plus stable au cours de cycles successifs de charge / décharge que celle des électrodes connues.

L'objet de la présente invention est un générateur électrochimique rechargeable au lithium comprenant une électrode positive dont la matière électrochimiquement active comprend au moins un oxyde d'un métal de transition et une électrode négative composée d'un support conducteur et d'une couche active contenant un liant et une matière électrochimiquement active qui est un oxyde mixte de lithium et de titane de formule générale LiₓTi_{y}O₄ dans laquelle 0,8 ≤ x ≤ 1,4 et 1,6 ≤ y < 2,2 , caractérisé en ce que ledit liant est un polymère ne contenant pas de fluor.

Avantageusement le liant est un polymère non-fluoré soluble dans l'eau ou formant une émulsion stable lorsqu'il est mis en suspension dans l'eau. La plupart des liants couramment utilisés aujourd'hui sont mis en oeuvre dans un solvant organique. C'est notamment le cas du polyfluorure de vinylidène (PVDF) qui est dissous dans la N-méthylpyrrolidone (NMP). Mais les procédés mettant en oeuvre des solvants organiques présentent des inconvénients à l'échelle industrielle en raison de la toxicité des solvants employés et des problèmes de coût et de sécurité liés au recyclage d'un grand volume de solvant. L'utilisation de liant compatible avec des solvants aqueux est donc particulièrement recherchée.
Selon un premier mode de réalisation de l'invention, le liant contient un élastomère. Parmi les élastomères utilisables, on peut citer les terpolymères éthylène / propylène / diène (EPDM), les copolymères styrène / butadiène (SBR), les copolymères acrylonitrile / butadiène (NBR), les copolymères bloc styrène / butadiène / styrène (SBS) ou styrène / acrylonitrile / styrène (SIS), les copolymères styrène / éthylène / butylène / styrène (SEBS), les terpolymère styrène / butadiène / vinylpyridine (SBVR), les polyuréthanes (PU), les néoprènes, les polyisobutylènes (PIB), les caoutchoucs butyle, etc... et les mélanges de ceux-ci. De préférence l'élastomère est un copolymère du butadiène; et de préférence encore l'élastomère est choisi parmi un copolymère acrylonitrile / butadiène (NBR) et un copolymère styrène / butadiène (SBR). La proportion de l'élastomère est de préférence comprise entre 30% et 70% en poids du liant.
Selon un deuxième mode de réalisation de l'invention, le liant contient un composé cellulosique. De préférence le composé cellulosique est choisi parmi une carboxyméthylcellulose (CMC), une hydroxypropylméthylcellulose (HPMC), une hydroxypropylcellulose (HPC), et une hydroxyéthylcellulose (HEC). De préférence le composé cellulosique est une carboxyméthylcellulose (CMC). De préférence encore la carboxyméthylcellulose (CMC) a un poids moléculaire moyen supérieur à environ 200 000. La proportion du composé cellulosique est de préférence comprise entre 30% et 70% en poids du liant.
Selon un troisième mode de réalisation de l'invention, le liant comprend un mélange d'un élastomère et d'un composé cellulosique. Selon une première variante, le liant comprend un mélange d'un copolymère acrylonitrile / butadiène (NBR) et de carboxyméthylcellulose (CMC). Selon une deuxième variante, ledit liant comprend un mélange d'un copolymère styrène / butadiène (SBR) et de carboxyméthylcellulose (CMC). De préférence, la proportion de l'élastomère est comprise entre 30% et 70% en poids du liant et la proportion du composé cellulosique est comprise entre 30% et 70% en poids du liant. De préférence encore, la proportion de l'élastomère est comprise entre 50% et 70% en poids du liant et la proportion du composé cellulosique est comprise entre 30 et 50% du liant.

Le générateur électrochimique rechargeable au lithium selon l'invention comprend une électrode négative et une électrode positive, un séparateur placé entre l'électrode positive et l'électrode négative, et un électrolyte contenant un sel conducteur de lithium dissout dans un solvant organique.
Le collecteur de courant est de préférence un support conducteur bidimensionnel, comme un feuillard plein ou perforé à base de carbone ou de métal, par exemple en cuivre, nickel, acier, inox ou aluminium.
La matière électrochimiquement active positive peut être un des matériaux connus pour être utilisables dans un générateur rechargeable au lithium comme un oxyde de métaux de transition, un sulfure, un sulfate et leurs mélanges. De préférence la matière active de l'électrode positive comprend au moins un oxyde d'un métal de transition choisi parmi un oxyde de vanadium, un oxyde lithié de manganèse, un oxyde lithié de nickel, un oxyde lithié de cobalt, et leurs mélanges.
Le solvant organique est un solvant ou un mélange de solvants choisi parmi les solvants usuels notamment les carbonates cycliques saturés, les carbonates cycliques insaturés, les carbonates non-cycliques, les esters d'alkyle, comme les formiates, les acétates, les propionates ou les butyrates, les éthers, et les mélanges de ceux-ci. Parmi les carbonates cycliques saturés, on peut citer par exemple le carbonate d'éthylène (EC), le carbonate de propylène (PC), le carbonate de butylène (BC), et les mélanges de ceux-ci. Parmi les carbonates cycliques insaturés, on peut citer par exemple le carbonate de vinylène (VC), ses dérivés, et les mélanges de ceux-ci. Parmi les carbonates non-cycliques, on peut citer par exemple le carbonate de diméthyle (DMC), le carbonate de diéthyle (DEC), le carbonate de méthyle éthyle (EMC), et les mélanges de ceux-ci. Parmi les esters d'alkyle, on peut citer par exemple l'acétate de méthyle, l'acétate d'éthyle, le propionate de méthyle, le propionate d'éthyle, le propionate de butyle, le butyrate de méthyle, le butyrate d'éthyle, le butyrate de propyle, et les mélanges de ceux-ci. Parmi les éthers, on peut citer par exemple le l'éther de diméthyle (DME) et les mélanges de ceux-ci.
Le sel conducteur de lithium peut être le perchlorate de lithium LiClO₄, l'hexafluoroarsénate de lithium LiAsF₆, l'hexafluorophosphate de lithium LiPF₆, le tétrafluoroborate de lithium LiBF₄, le trifluorométhanesulfonate de lithium LiCF₃SO₃, le trifluorométhanesulfonimide de lithium LiN(CF₃SO₂)₂ (LiTFSI) ou le trifluorométhanesulfoneméthide de lithium LiC(CF₃SO₂)₃ (LiTFSM).

L'invention a aussi pour objet un procédé de fabrication d'un générateur électrochimique rechargeable au lithium comprenant les étapes suivantes de réalisation de l'électrode négative. On met le liant sous forme de solution ou de suspension dans un solvant aqueux. Les polymères non-fluorés utilisables comme liant doivent être solubles dans l'eau ou bien former une émulsion stable (latex) lorsqu'ils sont mis en suspension dans l'eau. Pour former une pâte, on ajoute à la solution ou suspension la matière active pulvérulente et éventuellement des auxiliaires de fabrication comme par exemple un épaississant, etc.... On ajuste la viscosité de la pâte avec de l'eau et on recouvre de pâte au moins une face du support conducteur pour former la couche active. On sèche et on calandre le support recouvert de ladite couche active jusqu'à obtention de la porosité désirée comprise entre 20 et 60% et on obtient l'électrode.

D'autres caractéristiques et avantages de la présente invention apparaîtront au cours des exemples suivants de réalisation, donnés bien entendu à titre illustratif et non limitatif, et dans le dessin annexé.
La figure 1 représente l'évolution de la capacité réversible massique au cours d'un cyclage d'un générateur de format bouton selon l'invention et un générateur de l'art antérieur ; la capacité réversible massique C en mAh/g de matière active est donnée en ordonnée et le nombre de cycles N figure en abscisse.
La figure 2 est analogue à la figure 1 pour un électrolyte différent.
La figure 3 est le spectre obtenu par le test dit "D.S.C." (Differential Scanning Calorimetry) sur une électrode négative d'un générateur selon l'invention ; la puissance thermique W en mW/mg de matière active est donné en ordonnée, et en abscisse la température T en °C.
Les figures 4a, 4b et 4c représentent les trois premiers cycles d'un générateur électrochimique selon l'invention.

Les figures 5a, 5b et 5c sont analogues respectivement aux figures 4a, 4b et 4c mais pour un générateur électrochimique comprenant une électrode positive dont la matière active est différente.

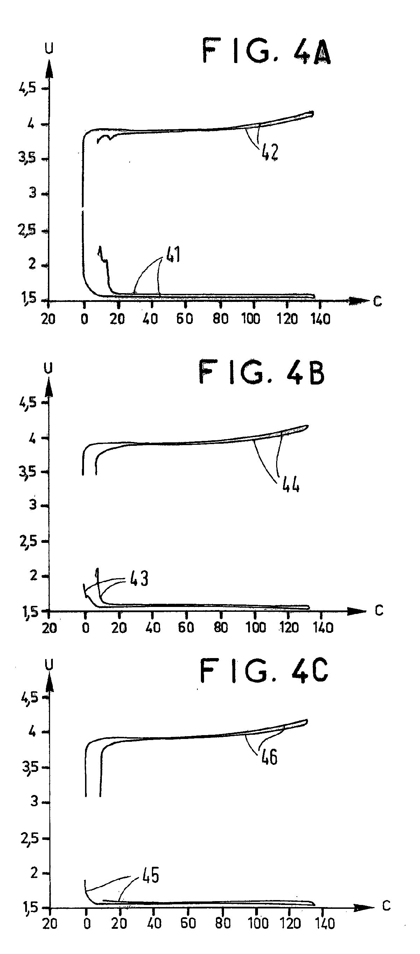

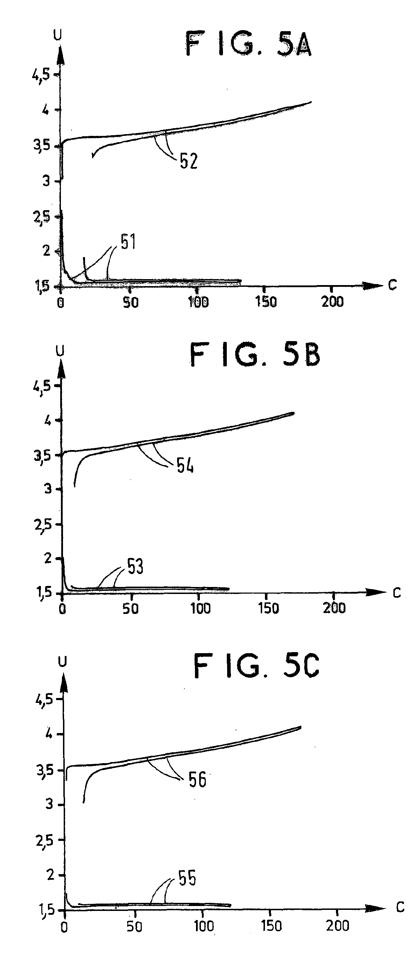

Sur les figures 4a, 4b et 4c et les figures 5a, 5b et 5c, la tension U en V par rapport à Li⁺ est donné en ordonnée, et en abscisse la capacité C en mAh/g de matière active de l'électrode considérée (la capacité est exprimée pour l'électrode positive en mAh/g de matière active positive et pour l'électrode négative en mAh/g de matière active négative).

### EXEMPLE 1

On prépare une électrode négative selon l'invention constituée d'une pâte supportée par un feuillard conducteur en aluminium. La pâte a la composition suivante :

| | | |
|---|---|---|
| - matière électrochimiquement active | Li_{4/3}Ti_{5/3}O₄ | 94% |
| - liant | SBR | 2% |
| | CMC de PM supérieur à 200 000 | 2% |
| - matériau conducteur | suie hautement divisée | 2% |

La matière active pulvérulente est ajoutée au SBR en solution à 51% en poids dans l'eau. Puis la CMC en solution dans l'eau à une concentration de 1% en poids est ajoutée au mélange précédent. La carboxyméthylcellulose utilisée est une CMC de haute viscosité, c'est-à-dire ayant un poids moléculaire moyen compris entre 325 000 et 435 000. La pâte obtenue est étalée sur un feuillard de cuivre, l'électrode est ensuite séchée à l'air à température ambiante puis calandrée jusqu'à l'obtention d'une porosité comprise entre 40 et 60%.

La contre-électrode est une feuille de lithium métallique. On place un séparateur microporeux de polyoléfine entre les électrodes pour former un faisceau électrochimique. On imprègne le faisceau électrochimique avec un électrolyte composé du sel de lithium LiPF₆ en solution 1M dans un solvant EC/DMC/DEC 2/2/1 en volume. On obtient alors une cellule de test la de format bouton.

### EXEMPLE 2

On fabrique une cellule de test Ib de format bouton analogue à celui de l'exemple 1 à l'exception du fait qu'il contient un électrolyte composé du sel de lithium LiPF₆ en solution 1M dans un solvant PC/EC/DMC 1/1/3 en volume.

### EXEMPLE 3

On fabrique une cellule de test IIa de format bouton analogue à celui de l'exemple 1 à l'exception du fait qu'il contient une électrode selon l'invention dont la pâte a la composition suivante :

| | | |
|---|---|---|
| - matière électrochimiquement active | Li_{4/3}Ti_{5/3}O₄ | 94% |
| - liant | NBR | 2% |
| | CMC de PM supérieur à 200 000 | 2% |
| - matériau conducteur | suie hautement divisée | 2% |

La matière active pulvérulente est ajoutée au NBR en solution à 41% en poids dans l'eau. Puis la CMC en solution dans l'eau à une concentration de 1% en poids est ajoutée au mélange précédent. La carboxyméthylcellulose utilisée est une CMC de haute viscosité, c'est-à-dire ayant un poids moléculaire moyen compris entre 325 000 et 435 000. La pâte obtenue est étalée sur un feuillard d'aluminium, l'électrode est ensuite séchée à l'air à température ambiante puis calandrée jusqu'à l'obtention d'une porosité comprise entre 40 et 60%.

### EXEMPLE 4 comparatif

On fabrique une cellule de test IIIa de format bouton analogue à celui de l'exemple 1 à l'exception du fait qu'il contient une électrode selon l'invention dont la pâte a la composition suivante :

| | | |
|---|---|---|
| - matière électrochimiquement active | Li_{4/3}Ti_{5/3}O₄ | 91% |
| - liant | PVDF | 7% |
| - matériau conducteur | suie hautement divisée | 2% |

Une solution de PVDF à 7% dans la N-méthylpyrrolidone (NMP) est préparée, puis la matière active pulvérulente est ajoutée progressivement à cette solution. La pâte obtenue est étalée sur un feuillard d'aluminium, l'électrode est ensuite séchée sous vide à 120°C puis calandrée jusqu'à l'obtention d'une porosité comprise entre 40 et 60%.

### EXEMPLE 5 comparatif

On fabrique une cellule de test IIIb de format bouton analogue à celui de l'exemple 4 à l'exception du fait qu'il contient un électrolyte composé du sel de lithium LiPF₆ en solution 1M dans un solvant PC/EC/DMC 1/1/3 en volume.

### EXEMPLE 6 comparatif

On fabrique une cellule de test IVa de format bouton analogue à celui de l'exemple 4 à l'exception du fait qu'il contient une électrode selon l'invention dont la pâte a la composition suivante :

| | | |
|---|---|---|
| - matière électrochimiquement active | Li_{4/3}Ti_{5/3}O₄ | 88% |
| - liant | PVDF | 10% |
| - matériau conducteur | suie hautement divisée | 2% |

Les cellules de test réalisées selon les exemples qui précédent, ont été évaluées en cyclage galvanostatique de la manière suivante.
- cycle 1 à température ambiante à un régime de 10mA/g de graphite,
- cycles 2 à 50 à 60°C à un régime de 20mA/g de graphite.

Les résultats obtenus sont rassemblés dans le tableau I ci-dessous. On a mesuré la capacité irréversible Cir et la capacité réversible Crev en mAh/g et on a calculé la perte de capacité par cycle ΔC pour un nombre de cycle N.

**Tableau I**

| Référence | Liant | Cir | Crev | N | ΔC |
|---|---|---|---|---|---|
| Ia | 2%SBR + 2%CMC | 10 | 137 | 50 | 0.03 |
| IIa | 2%NBR + 2%CMC | 10 | 137 | 50 | |
| IIIa | PVDF 7% | 10 | 137 | 50 | 0.15 |
| IVa | PVDF 10% | 12 | 136 | 10 | 0.53 |
| Ib | 2%SBR + 2%CMC | 7 | 140 | 50 | 0.03 |
| IIIb | PVDF 7% | 11 | 137 | 50 | 0.10 |

Ces premiers essais ont mis en évidence d'importantes différences entre le solvant organique et le solvant aqueux en ce qui concerne la stabilité en cyclage.

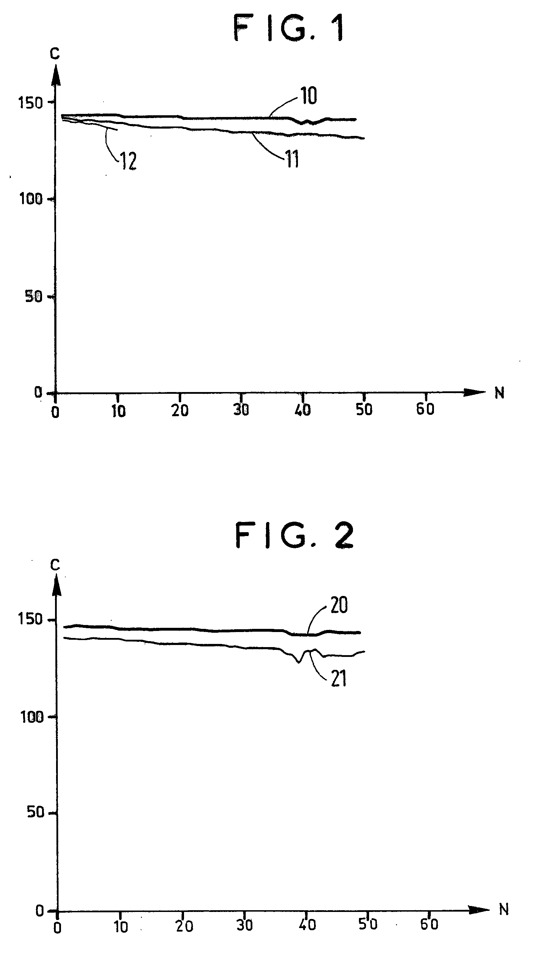

La figure 1 montre qu'en partant d'une capacité initiale comparable, la cellule de test la contenant une électrode avec un liant exempt de fluor (courbe 10) a une perte de capacité en cyclage qui est au moins cinq fois inférieure à celle que l'on observe pour les cellules IIIa et IVa contenant une électrode avec un liant fluoré (courbes 11 et 12).
La figure 2 montre que la cellule de test Ib contenant une électrode avec un liant exempt de fluor (courbe 20) possède une capacité initiale supérieure à la cellule IIIb contenant une électrode avec un liant fluoré (courbe 21), et présente une perte de capacité en cyclage trois fois moins élevée que cette cellule.

Après deux cycles de charge/décharge à température ambiante, la stabilité thermique de la matière active est évaluée par le test dit "D.S.C." (Differential Scanning Calorimetry) qui est une technique déterminant la variation du flux thermique dans un échantillon soumis à une programmation en température. Lorsqu'un matériau est chauffé ou refroidi, sa structure évolue et les transformations se réalisent avec échange de chaleur. L'analyse D.S.C. renseigne sur la température de transformation (pic endothermique ou exothermique) et sur l'énergie thermique requise pour la transformation (surface du pic).

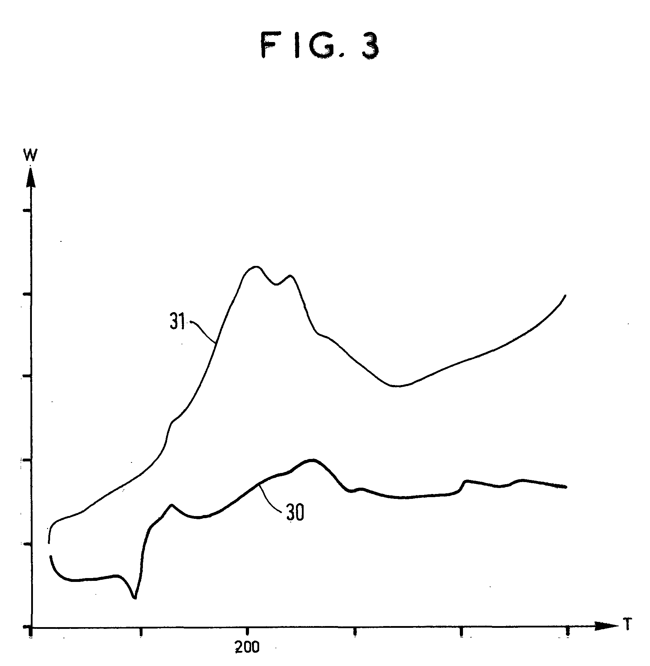

La figure 3 montre que l'électrode contenant un liant exempt de fluor (courbe 30) présente une énergie de l'ordre de 330J/g sans pic important, alors que l'électrode contenant un liant fluoré (courbe 31) présente un pic aux alentours de 200-250°C correspondant à une énergie de 1.40KJ/g. L'absence de fluor dans le liant permet donc de stabiliser thermiquement l'électrode.

### EXEMPLE 7

On fabrique un générateur électrochimique de format bouton selon l'invention contenant une électrode négative analogue à celle de l'exemple 1, et une électrode positive réalisée de manière connue comprenant une couche active sur un support qui est un feuillard d'aluminium, la couche active contenant une matière active qui est un oxyde de cobalt lithié LiCoO₂ et un liant PVDF. On place un séparateur microporeux de polyoléfine entre les électrodes positive et négative pour former un faisceau électrochimique. Enfin on imprègne le faisceau électrochimique avec un électrolyte composé du sel de lithium LiPF₆ en solution 1 M dans un solvant PC/EC/DMC 1/1/3 en volume. On obtient alors un générateur électrochimique Vb de format bouton.

### EXEMPLE 8

On fabrique un générateur électrochimique Vlb de format bouton analogue à celui de l'exemple 7 à l'exception du fait qu'il contient une électrode positive dont la matière active est un oxyde mixte lithié LiNiCoAlO₂.

Les générateurs obtenus dans les exemples qui précédent ont été évalués en cyclage galvanostatique à 25°C à un régime de Ic/20, où Ic est le courant nécessaire à la décharge de la capacité nominale Cn dudit accumulateur en une heure.
Les figures 4a, 4b et 4c et 5a, 5b et 5c montrent une bonne stabilité de l'électrode négative selon l'invention (courbes 41, 43, 45 et courbes 51, 53, 55) vis à vis de deux électrodes positives contenant une matière active différente, respectivement un oxyde de cobalt lithié LiCoO₂ (courbes 42, 44, 46) et un oxyde mixte lithié LiNiCoAlO₂ (courbes 52, 54, 56). Les courbes sont peu polarisées et les capacités C en mAh/g sont quasiment constantes comme le montre le tableau II ci-dessous.

**Tableau II**

| Référence | électrode | 1^{er} cycle | 2^{ème} cycle | 3^{ème} cycle |
|---|---|---|---|---|
| Vb | (-) Li_{4/3}Ti_{5/3}O₄ | 127 | 125 | 125 |
| | (+) LiCoO₂ | 126 | 124 | 122 |
| Vib | (-) Li_{4/3}Ti_{5/3}O₄ | 116 | 116 | 113 |
| | (+) LiNiCoAlO₂ | 163 | 163 | 161 |

Bien entendu, la présente invention n'est pas limitée aux modes de réalisation décrits, mais elle est susceptible de nombreuses variantes accessibles à l'homme de l'art sans que l'on s'écarte de l'esprit de l'invention. En particulier, on pourra sans sortir du cadre de l'invention modifier la composition de l'hydroxyde et la nature des éléments syncristallisés. On pourra également envisager l'utilisation d'un support conducteur d'électrode de nature et de structure différente. Enfin, les différents ingrédients entrant dans la réalisation de la pâte, ainsi que leurs proportions relatives, pourront être changés. Notamment des additifs destinés à faciliter la mise en forme de l'électrode, comme un épaississant ou un stabilisateur de texture, pourront y être incorporés dans des proportions mineures.

## Revendications

1. Générateur électrochimique rechargeable au lithium comprenant une électrode positive dont la matière électrochimiquement active comprend au moins un oxyde d'un métal de transition et une électrode négative composée d'un support conducteur et d'une couche active contenant un liant et une matière électrochimiquement active qui est un oxyde mixte de lithium et de titane de formule générale LiₓTi_{y}O₄ dans laquelle 0,8 ≤ x ≤ 1,4 et 1,6 ≤ y ≤ 2,2, **caractérisé en ce que** ledit liant est un polymère ne contenant pas de fluor.

2. Générateur selon la revendication 1, dans lequel ledit polymère non-fluoré est soluble dans l'eau ou capable de former une émulsion stable lorsqu'il est mis en suspension dans l'eau.

3. Générateur selon l'une des revendications 1 et 2, dans lequel ledit liant contient un élastomère.

4. Générateur selon l'une des revendications précédentes, dans lequel ledit élastomère est choisi parmi un copolymère d'acrylonitrile et de butadiène et un copolymère de styrène et de butadiène.

5. Générateur selon l'une des revendications précédentes, dans lequel la proportion dudit élastomère est comprise entre 30% et 70% en poids dudit liant.

6. Générateur selon l'une des revendications 1 et 2, dans lequel ledit liant contient un composé cellulosique.

7. Générateur selon la revendication 6, dans lequel ledit composé cellulosique est une carboxyméthylcellulose.

8. Générateur selon l'une des revendications 6 et 7, dans lequel la proportion dudit composé cellulosique est comprise entre 30% et 70% en poids dudit liant.

9. Générateur selon l'une des revendications 1 et 2, dans lequel ledit liant comprend le mélange d'un élastomère et d'un composé cellulosique.

10. Générateur selon la revendication 9, dans lequel ledit liant comprend un mélange d'un copolymère d'acrylonitrile et de butadiène et de carboxyméthylcellulose.

11. Générateur selon la revendication 9, dans lequel ledit liant comprend un mélange d'un copolymère de styrène et de butadiène et de carboxyméthylcellulose.

12. Générateur selon l'une des revendications 9 à 11, dans lequel la proportion dudit élastomère est comprise entre 30% et 70% en poids dudit liant et la proportion dudit composé cellulosique est comprise entre 30% et 70% en poids dudit liant.

13. Générateur selon l'une des revendications 9 à 12, dans lequel la proportion dudit élastomère est comprise entre 50% et 70% en poids dudit liant et la proportion dudit composé cellulosique est comprise entre 30% et 50% en poids dudit liant.

14. Générateur selon l'une des revendications précédentes, dans lequel la matière active de l'électrode positive comprend au moins un oxyde d'un métal de transition choisi parmi un oxyde de vanadium, un oxyde lithié de manganèse, un oxyde lithié de nickel, un oxyde lithié de cobalt, et leurs mélanges.

15. Procédé de fabrication d'un générateur selon l'une des revendications précédentes, comprenant les étapes suivantes de réalisation de ladite électrode négative :
- on met ledit liant sous forme de solution ou de dispersion dans un solvant aqueux,
- on ajoute à ladite solution ou dispersion, ladite matière active pulvérulente et éventuellement des auxiliaires de fabrication pour former une pâte,
- on ajuste la viscosité de la pâte avec de l'eau,
- on recouvre de pâte au moins une face dudit support conducteur pour former ladite couche active,
- on sèche et on calandre ledit support recouvert de ladite couche active pour obtenir ladite électrode.
